# EUROPÄISCHE PATENTANMELDUNG

(11) **EP 3 543 737 A1**
(43) Veröffentlichungstag der Anmeldung: **25.09.2019**
(21) Anmeldenummer: 19155988.9
(22) Anmeldetag: 07.02.2019
(51) Int. Cl.: G01S 13/93, G01S 7/02, G01S 7/40

(54) **RADARSENSORANORDNUNG FÜR EIN KRAFTFAHRZEUG UND KRAFTFAHRZEUG**

(30) Priorität: 22.03.2018 DE 102018204425
(71) Anmelder: AUDI AG, 85045 Ingolstadt (DE)
(72) Erfinder: Khlifi, Rachid, 85748 Garching (DE)

(57) **Zusammenfassung**

Radarsensoranordnung (6) für ein Kraftfahrzeug, aufweisend einen auf das Umfeld, insbesondere das Vorfeld, des Kraftfahrzeugs gerichteten Radarsensor (4) mit wenigstens einer bei Betrieb des Radarsensors (4) Abwärme abgebenden Komponente, die über ein Wärmeleitelement (15) mit einer Kühleinrichtung (18), insbesondere einem Kühlkörper (16), in einer ersten Kontaktposition des Wärmeleitelements (15) wärmeleitend verbunden ist, und ein als ein Radom wirkendes, einen Teil der Außenseite des Kraftfahrzeugs bildendes und von dem Radarsensor (4) beabstandetes Abdeckelement (1), wobei die Radarsensoranordnung (6) ferner ein Wärmeführungselement (20) zum Transport der Abwärme des Radarsensors (4) von einer zweiten Kontaktposition, in der das Wärmeleitelement (15) an dem Wärmeführungselement (20) anliegt, zu einer das Abdeckelement (1) erwärmenden Abtauposition und eine zum Umschalten des Wärmeleitelements (15) zwischen den Kontaktpositionen in Abhängigkeit von der Außentemperatur und/oder von einer Schnee- und/oder Eisanlagerung (7) an dem Abdeckelement (1) ausgebildete Schalteinrichtung.

## Beschreibung

Die Erfindung betrifft eine Radarsensoranordnung für ein Kraftfahrzeug, aufweisend einen auf das Umfeld, insbesondere das Vorfeld, des Kraftfahrzeugs gerichteten Radarsensor mit wenigstens einer bei Betrieb des Radarsensors Abwärme abgebenden Komponente, die über ein Wärmeleitelement mit einer Kühleinrichtung, insbesondere einem Kühlkörper, in einer ersten Kontaktposition des Wärmeleitelements wärmeleitend verbunden ist, und ein als Radom wirkendes, einen Teil der Außenseite des Kraftfahrzeugs bildendes und von dem Radarsensor beabstandetes Abdeckelement. Daneben betrifft die Erfindung ein Kraftfahrzeug.

Radarsensoren werden in modernen Kraftfahrzeugen häufig eingesetzt, beispielsweise was verschiedene Fahrzeugsysteme, insbesondere Fahrerassistenzsysteme, angeht. Dabei wird insbesondere das Umfeld des Kraftfahrzeugs mittels eines oder mehrerer Radarsensoren überwacht. Mögliche Anwendungen, die Radardaten von Radarsensoren nutzen, sind Einparkhilfen, Totwinkelüberwachungen, Pre-Crash-Sensing sowie Stop-and-Go-Systeme.

Um ein ansehnliches optisches Erscheinungsbild des Kraftfahrzeugs zu wahren, wurde vorgeschlagen, Radarsensoren, insbesondere auf das Vorfeld und den Rückraum des Kraftfahrzeugs gerichtete Radarsensoren, innerhalb der Stoßfänger des Kraftfahrzeugs verdeckt zu verbauen, so dass beispielsweise eine Kunststoffabdeckung des Stoßfängers ein Abdeckelement des Radarsensors bildet, welches mithin als ein Radom des Radarsensors wirkt. Beispielsweise ist es bekannt, die Radarsensoren mit einem eigenen Gehäuse zu versehen und an dem Stoßfänger zu befestigen.

Für den zuverlässigen Betrieb des Radarsensors, mithin eine hohe Qualität der Radardaten, ist eine möglichst geringe Beeinflussung des Wegs der ausgesandten und empfangenen Radarsignale wichtig. Daher sollten Wasser-, Eis- und Schneeschichten im Sende- und Empfangspfad der Antennenanordnung des Radarsensors hinsichtlich der Funktionssicherheit vermieden werden. Bei Anlagerung von entsprechenden Wasser-, Eis- und/oder Schneeschichten können die Radarsensoren gestört werden, wobei es im Extremfall auch zu einem kompletten Ausfall kommen kann. Um dies zu vermeiden, werden Radarsensoren meist mit einem Abdeckelement, das als Radom wirkt, abgedeckt. Jedoch tritt auch dann eine Verschlechterung der Funktionsweise eines derartigen Radarsensors auf, wenn sich auf der Oberfläche des Radoms Wasser-, Eis- oder Schneeschichten bilden.

Um diesem Problem entgegenzuwirken, wurde im Stand der Technik vorgeschlagen, das als Radom wirkende Abdeckelement mit einem Heizungsdraht zu versehen, um die Ablagerung von Schmutz, Eis, Schnee und Feuchtigkeit mit großer Zuverlässigkeit zu verhindern.

So offenbart beispielsweise DE 100 44 971 A1 ein Kraftfahrzeug mit einer Sende- und/oder Empfangseinrichtung zum Senden und/oder Empfangen elektromagnetischer Wellen und mit einer Einrichtung zum Entfernen oder Verhindern von Beschlag. Dort wird vorgeschlagen, ein Heizmittel zu verwenden, welches bei Außentemperaturen im Bereich von ca. -10° bis +8° C betrieben werden soll. Auch die Verwendung eines Temperaturschätzmodelles zum Betreiben des Heizmittels ist denkbar.

US 2007/0120759 A1 betrifft ein Radom mit einem Heizelement. Zur Verhinderung von Tau auf dem Radom wird ein Radom-Heizer zur Erwärmung der Oberfläche des Radoms verwendet.

Bei bekannten Lösungen wird je nach der Polarisation der Antennenanordnung des Radarsensors (horizontal oder vertikal) der Heizungsdraht vor dem Radarsensor in mehreren Schleifen entweder horizontal oder vertikal geführt.

Dennoch stört nachteilhafterweise der vertikal oder horizontal verlaufende Heizungsdraht entweder die vertikale oder die horizontale Messfähigkeit des Radarsensors. In einem Radarsensor, der sowohl im Azimut als auch in der Elevation mit hoher Leistungsfähigkeit messen soll, ist der Ansatz eines horizontal oder vertikal verlaufenden Heizungsdrahtes nicht einsetzbar, da nur in einer Polarisation die Leistungsfähigkeit gewährleistet ist.

Der Erfindung liegt daher die Aufgabe zugrunde, eine den Sende- und Empfangsbetrieb des Radarsensors möglichst wenig störende Realisierung einer Beheizung eines Abdeckelements anzugeben.

Zur Lösung dieser Aufgabe ist bei einer Radaranordnung der eingangs genannten Art erfindungsgemäß vorgesehenen, dass die Radarsensoranordnung ferner ein Wärmeführungselement zum Transport der Abwärme des Radarsensors von einer zweiten Kontaktposition, in der das Wärmeleitelement an dem Wärmeführungselement anliegt, zu einer das Abdeckelement erwärmenden Abtauposition und eine zum Umschalten des Wärmeleitelements zwischen den Kontaktpositionen in Abhängigkeit von der Außentemperatur und/oder von einer Schnee- und/oder Eisanlagerung an dem Abdeckelement ausgebildete Schalteinrichtung.

Es wird mithin von einer Radarsensoranordnung ausgegangen, die neben dem Radarsensor eine Kühleinrichtung aufweist, die insbesondere als ein Kühlkörper mit Rippen ausgebildet sein kann. Ein Wärmeleitelement wird genutzt, um Abwärme von Komponenten des Radarsensors an die Kühleinrichtung, insbesondere den Kühlkörper, zu leiten. Der Radarsensor ist im Kraftfahrzeug verdeckt verbaut, weshalb die Radarsensoranordnung auch ein als Radom wirkendes, einen Teil der Außenseite des Kraftfahrzeugs bildendes und von dem Radarsensor beabstandetes Abdeckelement aufweist.

Vorgeschlagen wird nun eine Erweiterung dieser Radarsensoranordnung, indem nicht nur die erste Kontaktposition des Wärmeleitelements, in der die Abwärme an die Kühleinrichtung weitergegeben wird, vorgesehen ist, sondern auch eine zweite Kontaktposition, in die das Wärmeleitelement bewegt werden kann, verwendet wird. In dieser zweiten Kontaktposition bzw. einer entsprechenden Stellung liegt das Wärmeleitelement an einem Wärmeführungselement an, welches eine hohe Wärmekapazität bzw. Wärmeleitfähigkeit aufweist und an dem Abdeckelement mündet, um dieses mittels der Abwärme des Radarsensors zu erwärmen und somit störende Schnee- bzw. Eisschichten zu entfernen oder sogar deren Bildung zu vermeiden. Mittels einer Schalteinrichtung kann das Wärmeleitelement zwischen den Kontaktpositionen bewegt werden, so dass mithin Abwärme entweder an die Kühleinrichtung, insbesondere den Kühlkörper, abgegeben wird und den Radarsensor entwärmt, oder aber die Wärme durch das Wärmeführungselement zu dem Abdeckelement geführt wird, so dass gleichzeitig der Radarsensor entwärmt und das Abdeckelement, also das Radom, erwärmt wird. Die Schalteinrichtung ist dabei grundsätzlich passiv denkbar, wird bevorzugt jedoch aktiv ausgebildet.

Es wird zusammenfassend mithin vorgeschlagen, die Radarsensor-Eigenerwärmung zur Heizung des Radoms, gebildet durch das Abdeckelement, zu nutzen. Auf diese Weise kann auf weitere störende Heizeinrichtungen im Radom selbst, die das Aussenden und dem Empfang von Radarsignalen beeinträchtigen könnten, verzichtet werden, so dass eine hohe Qualität der Radardaten gegeben ist, insbesondere auch in Fällen, in denen der Radarsensor in unterschiedlichen Polarisationen und/oder unterschiedlichen Richtungen zur hochqualitativen Messung ausgebildet sein soll.

Wie bereits erwähnt, ist es dabei grundsätzlich denkbar, aber weniger bevorzugt, ein passiv schaltendes Schaltelement in der Schalteinrichtung einzusetzen, insbesondere einen Bimetallschalter. Allerdings ist es hierbei technisch deutlich aufwändiger, sicherzustellen, dass ein Betrieb in den nötigen Einsatzbereichen stattfindet.

Eine besonders vorteilhafte Ausgestaltung der vorliegenden Erfindung sieht vor, dass die Schalteinrichtung einen Außentemperatursensor und eine in Abhängigkeit der Temperaturdaten des Außentemperatursensors, insbesondere durch eine Steuereinheit, angesteuerte Bewegungseinrichtung aufweist.

Zweckmäßigerweise kann der Außentemperatursensor dabei in und/oder an dem Abdeckteil, insbesondere benachbart einem als Radom wirkenden Abschnitt, oder allgemein in einer vom Temperaturverhalten dem Abdeckteil entsprechenden Position angeordnet sein. Der Temperatursensor liefert die aktuelle Außentemperatur um das Kraftfahrzeug herum an eine Steuereinheit der Schalteinrichtung, welche entscheidet, in welcher Kontaktposition sich das Wärmeleitelement befinden soll. Auf diese Weise kann in Außentemperaturbereichen, in denen eine Erwärmung des Abdeckteils zur Vermeidung von Ablagerungen zweckmäßig ist, Abwärme des Radarsensors an das Abdeckelement geleitet werden, während in sonstigen Fällen die Entwärmung des Radarsensors wie üblich über die Kühleinrichtung erfolgt.

Dabei sieht eine bevorzugte Weiterbildung vor, dass die Schalteinrichtung zum Einstellen der zweiten Kontaktposition in einem unterhalb einer Grenztemperatur, insbesondere 3 bis 6 °C, liegenden Temperaturbereich und zum Einstellen der ersten Kontaktposition oberhalb der Grenztemperatur ausgebildet ist. Als ein geeigneter Wert für diese obere Grenztemperatur hat sich 5 °C erwiesen, da unterhalb dieser Temperatur Anlagerungen von Schnee bzw. Schneematsch und/oder die Bildung von Eisschichten möglich ist. Eine Weiterbildung in diesem Zusammenhang sieht vor, dass die Schalteinrichtung zum Einstellen der ersten Kontaktposition auch unterhalb einer weiteren, den Temperaturbereich nach unten begrenzenden Grenztemperatur, insbesondere -1,5 bis -0,5 °C, ausgebildet ist. Das bedeutet, es existiert ein kleiner, klar begrenzter Temperaturbereich, bevorzugt von 5 °C bis -1 °C, in dem die zweite Kontaktposition verwendet wird. Dem liegt die Überlegung zugrunde, dass bei tieferen Temperaturen Schnee oder dergleichen ohnehin schwerer an dem Abdeckelement anhaftet, so dass bei einer Beheizung desselben das Risiko eines Anschmelzens und somit der Bildung einer Ablagerungsschicht eher erhöht wird. Das bedeutet, unterhalb von beispielsweise -1 °C kann eine Beheizung des Abdeckelements sogar kontraproduktiv sein, da beispielsweise eine Eisschicht entstehen kann, die auf dem Abdeckelement klebt.

Vorzugsweise kann der Radarsensor ein Gehäuse aufweisen, insbesondere umfassend ein weiteres Radom. Das Wärmeführungselement kann an dessen äußeren Rand entlanggeführt und insbesondere auch daran befestigt sein. Somit ist eine gute mechanische Führung und Lagerung des Wärmeführungselements außerhalb des Radarsensors selbst möglich. Dabei kann es zweckmäßig sein, wenn das Gehäuse nach außen zumindest im Bereich des Wärmeführungselements wärmeabweisend und/oder wärmereflektierend ausgebildet ist.

Vorteilhaft ist es ferner, wenn die Anordnung, insbesondere in symmetrischer Ausgestaltung, wenigstens zwei Wärmeführungselemente mit jeweils zugeordneten Wärmeleitelementen aufweist. Beispielsweise kann auf einer Seite und auf der gegenüberliegenden Seite des Radarsensors, insbesondere am Gehäuse entlang, ein Wärmeführungselement entlanggeführt werden, so dass symmetrisch zu beiden Seiten des Radarsensors eine Wärmeabgabe an das somit gleichmäßig und effektiv beheizte Abdeckelement und insbesondere dessen Radomabschnitt erfolgt. Selbstverständlich sind auch Ausgestaltungen denkbar, in denen vier derartige Wärmeführungselemente verwendet werden, die insbesondere alle auf der dem Radom abgewandten Seite des Radarsensors beginnen und an den vier Seiten des Radarsensors nach vorne geführt werden, um für eine gleichmäßige Beheizung des Abdeckelements zu sorgen. In derartigen Ausgestaltungen, in denen die Wärme auf der dem Abdeckelement gegenüberliegenden Seite abgeführt wird, kann sich zweckmäßig die Kühleinrichtung, insbesondere der Kühlkörper, zentral (mittig) unterhalb des Radarsensors auf dieser Seite anschließen. Bei genau zwei Wärmeführungselementen können diese dann an gegenüberliegenden Seiten der Kühleinrichtung, beabstandet von dieser beginnen, wobei das Wärmeleitelement beispielsweise in den Abstand zwischen dem Wärmeführungselement und der Kühleinrichtung eingreifen kann und dort zwischen den beiden Kontaktpositionen bewegbar ist.

Das Wärmeführungselement kann an dem Abdeckelement anliegen, wobei dann bevorzugt darauf zu achten ist, dass das Abdeckelement durch das Wärmeführungselement nicht verformt wird. Eine bevorzugte Ausgestaltung der Erfindung sieht daher vor, dass das Wärmeführungselement von dem Abdeckelement in einem Abstand, der geringer als der Abstand des Abdeckelements zu dem Radarsensor ist, beabstandet ist, so dass eine Wärmeübertragung durch Konvektion mittels der Luft stattfindet. Auf diese Weise wird eine mechanische Beeinträchtigung des Abdeckelements durch das wenigstens eine Wärmeführungselement vermieden, wobei dennoch eine hinreichende Erwärmung des Abdeckelements sichergestellt wird.

Dabei sei an dieser Stelle darauf hingewiesen, dass das Wärmeführungselement selbstverständlich selbst bereits eine Ausgestaltung aufweisen kann, die die Wärmeabgabe außerhalb eines vorgesehenen Abgabebereichs benachbart zu dem Abdeckelement minimiert, beispielsweise durch eine entsprechende Beschichtung und/oder sonstige Oberflächenbehandlung. Dahingegen kann selbstverständlich auch die Wärmeabgabe in dem Abgabebereich maximiert werden, beispielsweise durch eine Oberflächenvergrößerung im Sinne von Kühlrippen oder dergleichen.

Abwärme entsteht insbesondere auch bei neuerdings vorgeschlagenen, auf Halbleitertechnologie, insbesondere CMOS-Technologie, basierenden Radarsensoren.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Mithin ist es auch im Rahmen der vorliegenden Erfindung besonders bevorzugt, wenn der Radarsensor einen wenigstens einen Radartransceiver realisierenden, eine Abwärme abgebende Komponente oder Teil einer solchen Komponente bildenden Halbleiterchip, insbesondere CMOS-Chip, aufweist. Vorzugsweise können durch den Halbleiterchip auch eine Steuereinrichtung des Radarsensors und/oder eine digitale Signalverarbeitungskomponente des Radarsensors realisiert werden und/oder die Antennenanordnung des Radarsensors und der Halbleiterchip können als ein Package realisiert sein. Gerade ein solches Package stellt eine eine größere Menge von Abwärme abgebende Komponente des Radarsensors dar und kann beispielsweise wärmeleitend mit dem Wärmeleitelement und über die entsprechenden Kontaktpunkte entweder mit der Kühleinrichtung oder mit dem Wärmeführungselement verbunden werden.

In einer vorteilhaften Weiterbildung der vorliegenden Erfindung kann vorgesehen sein, dass zur Detektion einer Schnee- und/oder Eisanlagerung auf dem Abdeckelement, bei der die zweite Kontaktposition eingestellt wird, die Schalteinrichtung zur Auswertung des Rauschverhaltens der Radardaten des Radarsensors und/oder von Nahbereichsreflektionen der Radardaten des Radarsensors ausgebildet ist. Gerade bei auf Halbleitertechnologie, insbesondere CMOS-Technologie, basierenden Radarsensoren lassen sich auch Detektionen aus dem Nahbereich und/oder Rauschschwankungen besonders gut in den Radardaten detektieren und somit analysieren, so dass eine durch eine Ablagerung hervorgerufene Änderung der Charakteristik der Radardaten auf eben diese Ablagerung schließen lässt. Wird eine solche Ablagerung detektiert, was beispielsweise in der bereits erwähnten Steuereinheit geschehen kann, die als ein Mikroprozessor realisiert sein kann, stellt die Schalteinrichtung die zweite Kontaktposition des Wärmeleitelements ein, bis die Ablagerung wieder verschwunden ist und/oder für eine vorgegebene Zeit. Eine derartige Ansteuerung kann alternativ oder bevorzugt zusätzlich zu der Nutzung eines Temperaturbereichs, wie beschrieben, erfolgen.

Dabei sei an dieser Stelle noch angemerkt, dass sich die vorliegende Erfindung besonders vorteilhaft auf einen auf das Vorfeld des Kraftfahrzeugs gerichteten Radarsensor anwenden lässt, der verdeckt hinter einem Stoßfängerteil als Abdeckelement bzw. das Abdeckelement bereitstellend verbaut ist. Gerade von der Frontseite her ist ein Kraftfahrzeug häufig den Einwirkungen von Schnee und Eis ausgesetzt, so dass hier eine verlässliche Vermeidung solcher Ablagerungen besonders zweckmäßig ist. Bei dem Abdeckelement kann es sich also insbesondere um wenigstens einen Teil eines Stoßfängerbauteils handeln.

Neben der Radarsensoranordnung betrifft die vorliegende Erfindung auch ein Kraftfahrzeug, aufweisend wenigstens eine Radarsensoranordnung der erfindungsgemäßen Art. Sämtliche Ausführungen bezüglich der Radarsensoranordnung lassen sich analog auf das erfindungsgemäße Kraftfahrzeug übertragen, so dass auch mit diesen die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Skizze zur Erläuterung des der Erfindung zugrunde liegenden Problems,
- Fig. 2: eine erfindungsgemäße Radarsensoranordnung in einem ersten Schaltzustand,
- Fig. 3: die erfindungsgemäße Radarsensoranordnung in einem zweiten Schaltzustand, und
- Fig. 4: eine Prinzipskizze eines erfindungsgemäßen Kraftfahrzeugs.

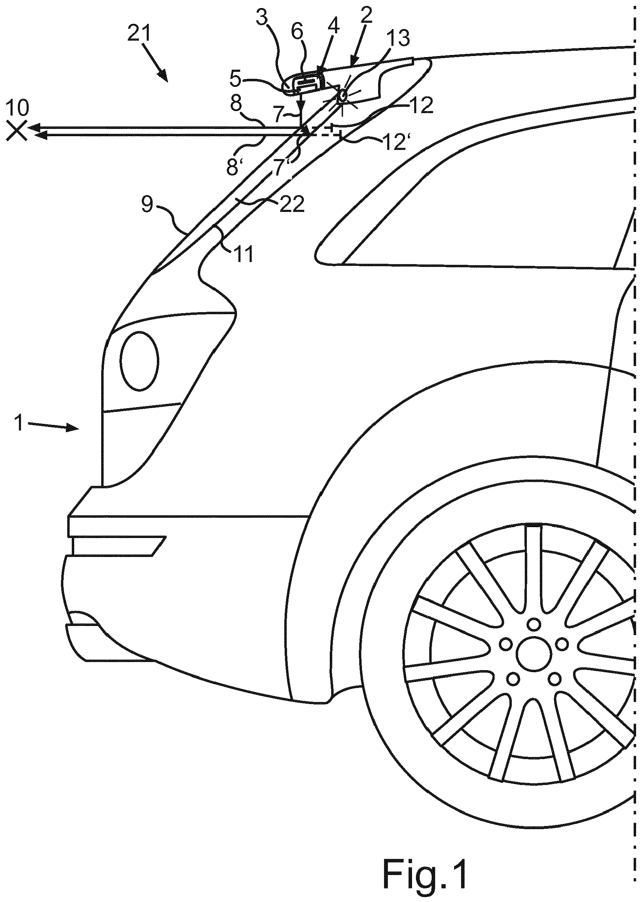

Fig. 1 zeigt zur Erläuterung des der Erfindung zugrunde liegenden Problems eine Prinzipskizze eines hinter einem als Radom wirkenden Abdeckelement 1, hier einem Stoßfängerteil 2 eines Stoßfängers 3, verbauten Radarsensor 4. Wie anhand des angedeuteten Erfassungsbereichs 5 des Radarsensors 4 gezeigt ist, durchqueren die Radarsignale des Radarsensors 4 das Abdeckteil 1, welches somit als ein Radom wirkt. Das Abdeckteil 1 deckt den Radarsensor 4, der innerhalb des Stoßfängers 3 befestigt sein kann, nach außen hin ab, bildet mithin Teil der Außenseite eines Kraftfahrzeugs, in dem die in Fig. 1 gezeigte Anordnung 6 vorgesehen ist. Kommt es nun zu widrigen Wetterumständen, beispielsweise zu Schneefall bei Temperaturen um den Gefrierpunkt, kann sich, wie dargestellt, eine Schnee- und/oder Eisablagerung 7 auf dem Abdeckelement 1 bilden. Eine solche Ablagerung 7 kann die Detektionseigenschaften des Radarsensors 4 negativ beeinflussen.

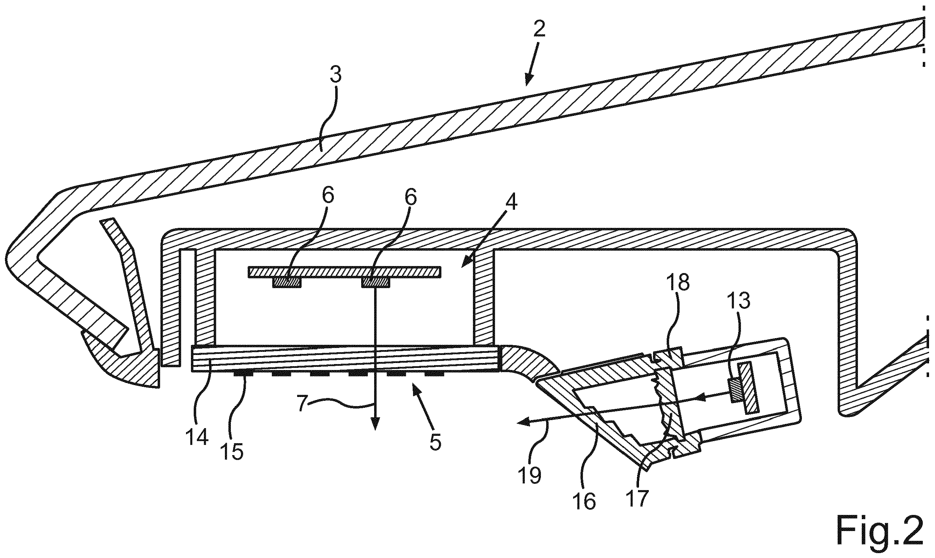

Um hier Abhilfe zu schaffen, soll die Abwärme des Radarsensors 4 einer solchen Radarsensoranordnung 6 zur Erwärmung des Abdeckelements 1 herangezogen werden. Eine entsprechende erfindungsgemäße Radarsensoranordnung 6 ist in Fig. 2 schematisch dargestellt. Ersichtlich weist der hier genauer gezeigte Radarsensor 4 ein Gehäuse 8 auf, welches im Übrigen auch ein weiteres Radom 9 beinhaltet. Innerhalb des Gehäuses 8 ist, beispielsweise auf einer Leiterplatte 10, ein Package 11 angeordnet, welches neben einer Antennenanordnung 12 des Radarsensors 4 auch einen Halbleiterchip 13, hier einen CMOS-Chip, realisiert. Durch den Halbleiterchip 13 wiederum sind ein Radartransceiver, eine digitale Signalverarbeitungskomponente (DSP) und eine Steuereinrichtung 14 des Radarsensors 4 realisiert.

Das Package 11 stellt eine Abwärme erzeugende Komponente des Radarsensors 4 dar. Um die dort entstehende Wärme abzuleiten, ist der Radarsensor 4 in dem in Fig. 2 gezeigten Zustand über Wärmeleitelemente 15, die sich in einer ersten Kontaktposition befinden, mit einer vorliegend als Kühlkörper 16 mit Kühlrippen 17 realisierten Kühleinrichtung 18 verbunden.

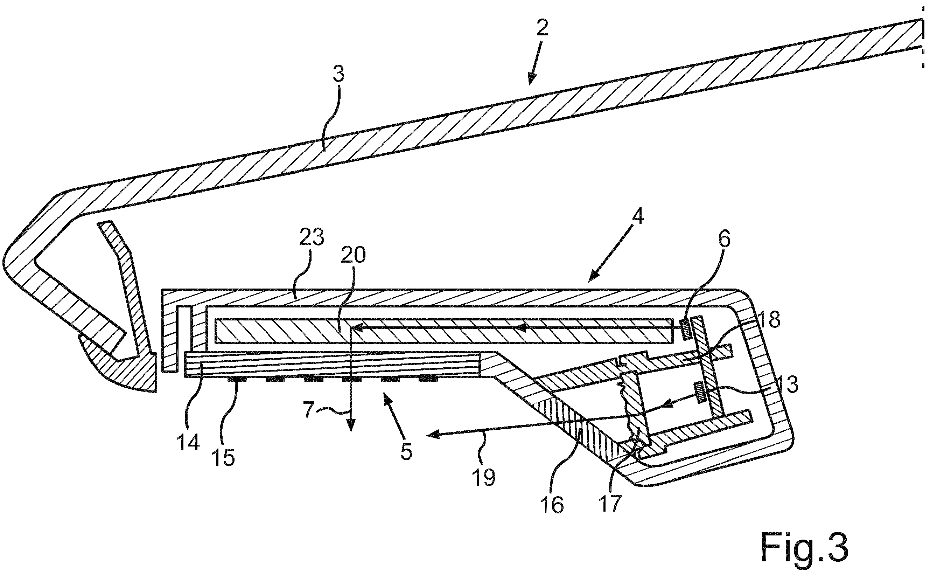

Wie durch die Pfeile 19 angedeutet ist, sind die Wärmeleitelemente 15 bewegbar ausgestaltet, wofür eine der Übersichtlichkeit halber nicht näher dargestellte Bewegungseinrichtung als Teil einer Schalteinrichtung vorgesehen ist. Dabei können die Wärmeleitelemente 15 zwischen der in Fig. 2 gezeigten ersten Kontaktposition und einer in Fig. 3 gezeigten zweiten Kontaktposition bewegt werden. In der zweiten Kontaktposition liegen die Wärmeleitelemente 15 an vorliegend L-förmig ausgestalteten Wärmeführungselementen 20 an, die symmetrisch gegenüber einer Mittelebene des Radarsensors 4 und beabstandet zu dem Kühlkörper 16 angeordnet sind. Die Wärmeführungselemente 20 sind außen entlang des Gehäuses 8, welches wärmeabweisend ausgeführt ist, zur gegenüberliegenden Seite des Radarsensors 4 nahe an das Abdeckelement 1, von diesem jedoch noch leicht beabstandet, geführt. In einer alternativen Ausgestaltung können die Wärmeführungselemente 20 auch an dem Abdeckelement 1 anliegen.

Die Radarsensoranordnung 6 weist nun ferner als Teil der Schalteinrichtung einen Außentemperatursensor 21 auf, mit dem die Temperatur außerhalb des Kraftfahrzeugs erfasst werden kann. Die entsprechenden Temperaturwerte werden an eine Steuereinheit der Schalteinrichtung geliefert, die vorliegend als Teil der Steuereinrichtung 14 realisiert ist. Diese Steuereinrichtung 14 kann im Übrigen auch ausgebildet sein, die Radardaten des Radarsensors 4 dahingehend zu analysieren, ob eine Schnee- und/oder Eisanlagerung 7 vorliegt, was sich insbesondere durch ein erhöhtes Rauschniveau feststellen lässt.

Vorliegend ist in der Steuereinheit ein Temperaturbereich von -1 °C bis 5 °C definiert, innerhalb dessen die Steuereinheit durch Ansteuerung der Bewegungseinrichtung das Wärmeleitelement 15 in die in Fig. 3 gezeigte zweite Kontaktposition verbringt. Außerhalb dieses Temperaturbereichs wird das Wärmeleitelement 15 in der in Fig.2 gezeigten ersten Kontaktposition eingestellt.

Das bedeutet, in der ersten Kontaktposition, vgl. Fig. 2, wird wie durch den Pfeil 22 angedeutet die Abwärme des Radarsensors 4 mittels des Kühlkörpers 16 bzw. seiner Kühlrippen 17 abgegeben, das bedeutet, der Radarsensor 4 wird wie üblich entwärmt.

Innerhalb des Temperaturbereichs aber, vgl. Fig. 3, wird die Wärme über die Wärmeführungselemente 20 zu dem Abdeckelement 1 geführt, wo sie durch Konvektion, vgl. Pfeile 23, das Abdeckelement 1 erwärmt, vgl. Pfeile 24. Auch bei Feststellung einer Ablagerung 7 kann entsprechend eine Erwärmung des Abdeckelements 1 erfolgen, bevorzugt wird jedoch die Verwendung eines Temperaturbereichs.

Durch die Wärmeleitelemente 17 und die Schalteinrichtung kann also zwischen einer reinen Kühlung des Radarsensors 4 über die Kühleinrichtung 18 und einer Nutzung der Abwärme des Radarsensors 4 zur Erwärmung des Abdeckteils 1 umgeschaltet werden.

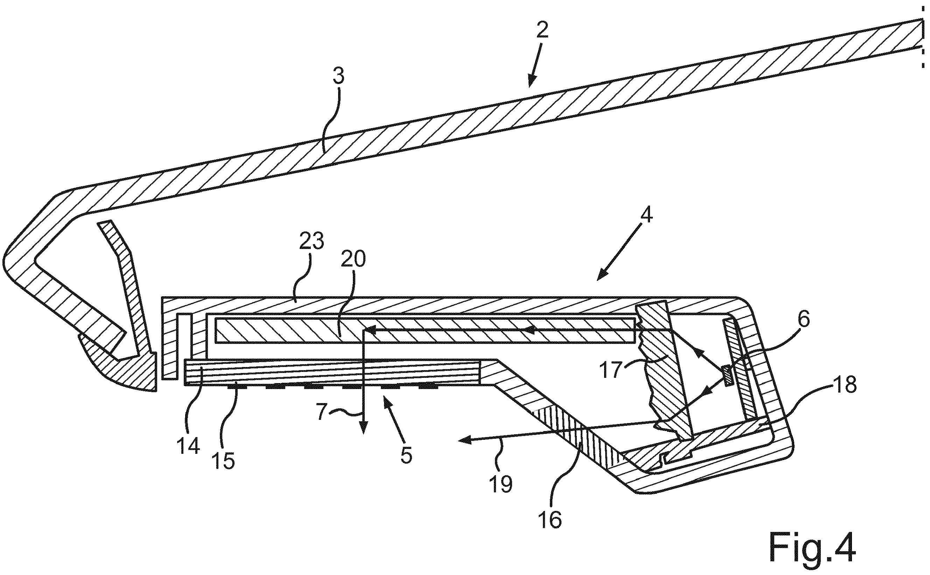

Fig. 4 zeigt schließlich eine Prinzipskizze eines erfindungsgemäßen Kraftfahrzeugs 25. Ersichtlich sind in den vorderen und hinteren Stoßfängern 3 jeweils drei erfindungsgemäße Radarsensoranordnungen 6 vorgesehen.

## Patentansprüche

1. Radarsensoranordnung (6) für ein Kraftfahrzeug, aufweisend einen auf das Umfeld, insbesondere das Vorfeld, des Kraftfahrzeugs gerichteten Radarsensor (4) mit wenigstens einer bei Betrieb des Radarsensors (4) Abwärme abgebenden Komponente, die über ein Wärmeleitelement (15) mit einer Kühleinrichtung (18), insbesondere einem Kühlkörper (16), in einer ersten Kontaktposition des Wärmeleitelements (15) wärmeleitend verbunden ist, und ein als ein Radom wirkendes, einen Teil der Außenseite des Kraftfahrzeugs bildendes und von dem Radarsensor (4) beabstandetes Abdeckelement (1),
**dadurch gekennzeichnet,**
**dass** die Radarsensoranordnung (6) ferner ein Wärmeführungselement (20) zum Transport der Abwärme des Radarsensors (4) von einer zweiten Kontaktposition, in der das Wärmeleitelement (15) an dem Wärmeführungselement (20) anliegt, zu einer das Abdeckelement (1) erwärmenden Abtauposition und eine zum Umschalten des Wärmeleitelements (15) zwischen den Kontaktpositionen in Abhängigkeit von der Außentemperatur und/oder von einer Schnee- und/oder Eisanlagerung (7) an dem Abdeckelement (1) ausgebildete Schalteinrichtung.

2. Radarsensoranordnung (6) nach Anspruch 1,
**dadurch gekennzeichnet,**
**dass** die Schalteinrichtung einen Außentemperatursensor und eine in Abhängigkeit der Temperaturdaten des Außentemperatursensors (21), insbesondere durch eine Steuereinheit, angesteuerte Bewegungseinrichtung aufweist.

3. Radarsensoranordnung (6) nach Anspruch 1 oder 2,
**dadurch gekennzeichnet,**
**dass** die Schalteinrichtung zum Einstellen der zweiten Kontaktposition in einem unterhalb einer Grenztemperatur, insbesondere 3 bis 6 °C, liegenden Temperaturbereich und zum Einstellen der ersten Kontaktposition oberhalb der Grenztemperatur ausgebildet ist.

4. Radarsensoranordnung (6) nach Anspruch 3,
**dadurch gekennzeichnet,**
**dass** die Schalteinrichtung zum Einstellen der ersten Kontaktposition auch unterhalb einer weiteren, den Temperaturbereich nach unten begrenzenden Grenztemperatur, insbesondere -1,5 bis -0,5 °C, ausgebildet ist.

5. Radarsensoranordnung (6) nach einem der vorangehenden Ansprüche,
**dadurch gekennzeichnet,**
**dass** der Radarsensor (4) ein Gehäuse (8), insbesondere umfassend ein weiteres Radom (9), aufweist, an dessen äußerem Rand entlang das Wärmeführungselement (20) geführt und insbesondere befestigt ist.

6. Radarsensoranordnung (6) nach Anspruch 5,
**dadurch gekennzeichnet,**
**dass** das Gehäuse (8) nach außen zumindest im Bereich des Wärmeführungselements (20) wärmeabweisend und/oder wärmereflektierend ausgebildet ist.

7. Radarsensoranordnung (6) nach einem der vorangehenden Ansprüche,
**dadurch gekennzeichnet,**
**dass** die Anordnung, insbesondere in symmetrischer Ausgestaltung, wenigstens zwei Wärmeführungselemente (20) mit jeweils zugeordneten Wärmeleitelementen (15) aufweist.

8. Radarsensoranordnung (6) nach einem der vorangehenden Ansprüche,
**dadurch gekennzeichnet,**
**dass** das Wärmeführungselement (20) an dem Abdeckelement (1) anliegt oder von diesem in einem Abstand, der geringer als der Abstand des Abdeckelements (1) zu dem Radarsensor (4) ist, beabstandet ist, so dass eine Wärmeübertragung durch Konvektion mittels der Luft stattfindet.

9. Radarsensoranordnung (6) nach einem der vorangehenden Ansprüche,
**dadurch gekennzeichnet,**
**dass** der Radarsensor (4) einen wenigstens einen Radartransceiver realisierenden, eine Abwärme abgebende Komponente oder Teil einer solchen Komponente bildenden Halbleiterchip (13), insbesondere CMOS-Chip, aufweist.

10. Radarsensoranordnung (6) nach Anspruch 9,
**dadurch gekennzeichnet,**
**dass** durch den Halbleiterchip (13) auch eine Steuereinrichtung (14) des Radarsensors (4) und/oder eine digitale Signalverarbeitungskomponente realisiert sind und/oder eine Antennenanordnung (12) des Radarsensors (4) und der Halbleiterchip (13) als ein Package (11) realisiert sind.

11. Radarsensoranordnung (6) nach einem der vorangehenden Ansprüche,
**dadurch gekennzeichnet,**
**dass** zur Detektion einer Schnee- und/oder Eisanlagerung (7) auf dem Abdeckelement (1), bei der die zweite Kontaktposition eingestellt wird, die Schalteinrichtung zur Auswertung des Rauschverhaltens der Radardaten des Radarsensors (4) und/oder von Nahbereichsreflektionen der Radardaten des Radarsensors (4) ausgebildet ist.

12. Kraftfahrzeug (25), aufweisend eine Radarsensoranordnung (6) nach einem der vorangehenden Ansprüche.
